Europäisches Patentamt

European Patent Office

Office européen des brevets

(11) Publication number: **0 238 296**
**A2**

# EUROPEAN PATENT APPLICATION

(21) Application number: 87302256.0

(22) Date of filing: 17.03.87

(51) Int. Cl.⁴: **G 11 B 15/66**
G 11 B 15/675

(30) Priority: 21.03.86 US 842449

(43) Date of publication of application:
23.09.87 Bulletin 87/39

(84) Designated Contracting States: **DE FR GB NL**

(71) Applicant: **Laser Magnetic Storage International Company**
**4425 Arrows West Drive**
**Colorado Springs Colorado 80907 (US)**

(72) Inventor: **Schonfeld, Arnold**
**3216 Kennedy Road**
**Norristown Pennsylvania 19403 (US)**

**Lane, Robert L.**
**402 Briar Drive**
**Broomall Pennsylvania 19008 (US)**

(74) Representative: **Caro, William Egerton et al**
**J. MILLER & CO. Lincoln House 296-302 High Holborn**
**London WC1V 7JH (GB)**

A request for correction of the description and of sheet 5/5 of the drawings has been filed pursuant to Rule 88 EPC. A decision on the request will be taken during the proceedings before the Examining Division (Guidelines for Examination in the EPO, A-V, 2.2).

(54) Apparatus for loading and unloading a tape cartridge.

(57) Apparatus for loading and unloading a tape cartridge (2), particularly a standard 3480 tape cartridge, has a loading rack (20) for receiving the tape cartridge along one of its side edges, so that what is normally considered to be the rear edge of the tape cartridge is laterally received within the loading/unloading mechanism. The apparatus includes means for properly interacting with the tape cartridge in this modified orientation for engagement of the leader block of the tape cartridge, so that the tape cartridge is then ready for loading into the transport apparatus and for detection of the condition of the tape cartridge within the apparatus.

FIG.1

# Description

## APPARATUS FOR LOADING AND UNLOADING A TAPE CARTRIDGE

The present invention relates generally to the storage of data on magnetic recording tape, and in particular, to the storage of data on magnetic tape in cartridge form.

In the course of developing various systems for the storage of data on magnetic recording tape, particularly off-line storage of data in the form of back-up storage, a variety of different formats have been developed. Many of these formats call for the tape to be contained in an appropriate cartridge, both to facilitate handling of the tape while in use, and to protect the tape while in storage.

Recently, IBM Corporation has announced a tape cartridge which is primarily intended for use in its Model 3480 data storage system, for the storage of relatively large quantities of data (of the order of 200 megabytes). Details regarding the construction of this type of tape cartridge (hereinafter referred to as a 3480 tape cartridge) may be had by reference to United States Patent Specification No. 4,452,406. By way of general description, the 3480 tape cartridge comprises a single reel containing a web of magnetic tape and contained in a cuboidal enclosure having dimensions of about 10 cm (4 inch) in width, 12.7 cm (5 inch) in length, and 2.5 cm (1 inch) in height. The cartridge enclosure includes an aperture in one of its major faces, to receive means for rotating the reel of tape contained within the cartridge, and an aperture in one of its corners, for gaining access to the free end of the web of tape. A so-called "leader block" is connected to the free end of the web, and is frictionally received within the open corner of the cartridge so that it is capable of being withdrawn from and replaced within the cartridge by appropriate means.

In connection with the 3480 tape cartridge, IBM Corporation has also developed equipment for receiving the tape cartridge and for placing the web of tape which it contains properly in operative association with a magnetic read/write head. Further details regarding such equipment may be had by reference to United States Patent Specifications Nos. 4,432,508; 4,399,959; 4,399,936; and 4,335,858, which illustrate various different devices which have been developed to accommodate the 3480 tape cartridge.

Unlike many of the other types of tape cartridges which have been developed for use in the off-line storage of data, the 3480 tape cartridge houses only a single reel of magnetic recording tape. The leader block which is connected to the free end of the web of tape is used to introduce the web of tape to the transport apparatus (and the read/write head). To this end, the transport apparatus must be provided with appropriate means for withdrawing the leader block from its nesting within the 3480 tape cartridge, and for threading the leader block (and the web of tape) through the apparatus and past the read/write head. Means must also be provided for unthreading the web of tape (and the leader block) from the apparatus, and for replacing the leader block within its nesting in the 3480 tape cartridge. In connection with such operations, there are two major considerations which have particular pertinence to the present invention.

First, special means must be provided to engage the leader block assembly, and to guide the leader block (and the tape which follows) through the transport apparatus which is to operate upon the web of tape. This requires care in withdrawing the leader block from the tape cartridge, and in guiding the web of tape from the supply reel of the tape cartridge, past the read/write head, and into engagement with the take-up reel which is traditionally provided to cooperate with the supply reel in transporting the web of tape through the apparatus and past the read/write head. This necessitates the development of an appropriate path for threading the leader block through the apparatus, as well as means which have sufficient driving forces to withdraw the leader block from its normally seated position within the tape cartridge, and to replace the leader block within this normally seated position after the tape cartridge has been used. To meet these needs, as well as other design requirements regarding data density and performance characteristics, those devices described in the above-identified United States Patent Specifications each make use of a loading mechanism which is essentially separate from the remainder of the apparatus which is used to operate upon the magnetic recording tape. In each case, a track or groove is provided for guiding the leader block through the desired tape path and to the take-up reel, under the influence of a dedicated driving means which is separate from the various components comprising the tape transport. Although several different mechanisms are described, in each case a separate motor and track/groove drive is provided to achieve proper interfacing of the web of tape with the apparatus.

Second, as with any magnetic tape recording apparatus, care must be taken to develop a proper tape path between the supply and take-up reels, and across the read/write head, to ensure proper registration of the tape with the read/write head. The primary consideration in this regard is one of length, because the tape path must generally be long enough to accommodate distortion of the tape as the web of tape is drawn through the apparatus, as a result of mechanical irregularities in the apparatus. To this end, those devices described in the above-identified United States patent specifications each provide a tape path of significant length, to account for such potential irregularities. A secondary consideration is that care must be taken to avoid undesirable contact between the oxide coating provided on the web of magnetic recording tape, and components of the apparatus other than the read/write head, such as bearings and idler rollers. When the 3480 tape cartridge is used as intended in the various devices described in the above-identified United States Patent Specifications, the oxide coating (formed on the inner most face of the tape on the supply reel) normally faces toward the interior of the transport apparatus due to its orientation. As a result of this placement, as the tape is threaded through the transport apparatus the potential exists for the oxide coating to be drawn across various of the guiding structures associated with the apparatus. Because contact with such structures can compromise the useful life of the tape cartridge, and give rise to a potential for memory loss in the event that portions of the oxide coating become damaged, special care is taken to avoid contact between the oxide coating and those guiding structures which the oxide coating could potentially contact. For example, air-bearings are provided on either side of the read/write head to avoid contact between the bearings and the web of tape which passes across them.

As a result of these and other design considerations, those devices which have been developed to operate upon 3480 tape cartridges have generally been large, cumbersome and expensive. While this can be justified in connection with relatively large, mainframe applications, such design constraints have significantly limited, if not totally precluded, use of the 3480 tape cartridge in connection with relatively low cost, minicomputer or microcomputer applications.

Yet another consideration which has inhibited use of the 3480 tape cartridge in mini/micro-computer applications is one of space. It is generally impractical, and therefore undesirable, to require the purchase of an apparatus for off-line, back-up storage or the like, which is significantly larger than the primary equipment which the apparatus is to support. In fact, due to the prevalent use of 13.3cm (5 1/4 inch) magnetic recording (floppy) discs in connection with such applications, a de facto standard has come about for any form of storage equipment (floppy disc, hard disc, cartridge, etc.) which is to replace or relate to such conventional storage means. The recognized "form factor" or "footprint" of a standard 13.3cm (5 1/4 inch) magnetic recording disc calls for a container or housing having dimensions of about 14.6 cm (5 3/4 inch) in width, 20.3cm (8 inch) in depth and 8.2cm (3 1/4 inch) in height. Those devices described in the above-identified United States Patent Specifications are not adaptable to such applications.

Accordingly, limitations of cost and size have significantly limited the ability to use the 3480 tape cartridge in mini/micro-computer applications. For this reason, efforts have been made to develop other means for adapting 3480 tape cartridges to the 13.3cm (5 1/4 inch) form factor which is desired for such applications. One such system is described in our co-pending applications of even date based upon United States Patent Applications Serial Nos. 842446, 842450 and 842487.

Briefly, these patent applications describe a system for engaging the leader block of a 3480 tape cartridge and for guiding the leader block through the transport apparatus using a threading mechanism which is directly associated with the take-up reel of the apparatus, rather than requiring the use of an independent loading mechanism. To accomplish such loading of the leader block in an apparatus where space requirements are to be kept to a minimum, without unacceptably compromising the tape path, and while avoiding contact between the oxide layer on the web of tape and structures other than the read/write head, it has surprisingly been found to be desirable to receive the tape cartridge within the apparatus in an orientation which is rotated 90 degrees from its normally intended orientation. As a consequence of this placement, the oxide coating is oriented so as to avoid contact with guiding structures such as bearings and idler rollers, and the tape path for the web of tape is significantly extended from that which would result from conventional placement of the 3480 tape cartridge within the transport apparatus.

Although such placement of the tape cartridge has enabled the development of an apparatus which can accommodate a 3480 tape cartridge within the 13.3cm (5 1/4 inch) form factor of a conventional disc-type storage apparatus, rotation of the tape cartridge through an angle of 90 degrees has caused certain difficulties. For example, because of this rotation, the slot which is provided in the leader block for engagement by the threading mechanism no longer extends rearwardly from the tape cartridge, but rather extends transversely from a side edge, making engagement of the slot more difficult. Moreover, various ancillary features such as the means which are traditionally provided to prevent data from being recorded over existing data to be retained (so-called write protection) are no longer in their expected location. It therefore became necessary to develop a means for receiving the 3480 tape cartridge, for loading and unloading, in an orientation which is rotated 90 degrees from the normally intended placement of the tape cartridge, without compromising the performance features of the tape cartridge.

The present invention seeks to provide means for receiving a 3480 tape cartridge for loading and unloading of the magnetic recording tape which it contains, in an orientation which differs from its normally intended placement.

The present invention also seeks to provide such apparatus wherein the means used to receive the tape cartridge, and to operate upon the tape cartridge for loading and unloading, are sufficiently compact to fit within a standard 13.3cm (5 1/4 inch) footprint or form factor.

The present invention further seeks to provide such apparatus wherein the tape cartridge is receive within the apparatus without compromising or inhibiting any of its operative features.

The present invention also seeks to provide such an apparatus wherein sufficient safeguards are provided to avoid improper operation of the apparatus, or damage to the tape cartridge.

The present invention yet further seeks to provide such apparatus of sufficient simplicity and low cost as to be usable with mini or micro-computer operations.

According to the invention, apparatus for loading and unloading a tape cartridge in a tape transport, the tape cartridge including a web of tape disposed on a supply reel and having a free end engaged by a leader block, the leader block having an engagement slot opening towards a rear edge of the tape cartridge, is characterised by a loading rack for receiving a tape cartridge with its rear edge along a side edge of the loading rack, so that the slot is transversely oriented in the loading rack, and means for engaging the transversely oriented slot in the leader block, for leading and unloading tape in the tape transport.

Preferably the rack is movable between a standby position for receiving a tape cartridge in a standby position, and an operative position in which the cartridge is in an operative position.

With advantage, the slot engaging means includes a guide pin for engaging the slot of the leader block, and guide pin locating means for locating the guide pin in the slot when the tape cartridge is located in the standby position.

The guide pin locating means may include a lever, one end of which has a shoulder for engaging a leading side edge of the tape cartridge, and the other end of which has a pin for receiving the guide pin and for moving the guide pin towards and away from the slot responsive to engagement and disengagement of the shoulder.

Movement of the pin of the lever may be regulated by a slot in the apparatus, in which slot the pin is engaged.

The lever may be biased by a spring to draw the pin away from the slot.

The lever may be mounted for movement away from the tape cartridge against the biasing force of a spring, so that the pin is withdrawable from the guide pin when the tape cartridge is in its operative position.

An additional lever may be pivotally connected to the lever, and may include a protrusion for alternative engagement and disengagement with a part of the loading rack.

The protrusion of the additional lever may be disengaged from the part of the loading rack as the pin and guide pin reach the end of the slot in the leader block of the cartridge in the standby position, whereby the spring is enabled to move the lever towards the cartridge.

Conveniently, the apparatus is housed in an enclosure having an aperture for receiving the tape cartridge, and the tape cartridge is locatable between the inside lip of the aperture and stop means.

If the tape cartridge has a bevelled front edge opposite the rear edge, the aperture may include a chamfer for receiving the bevelled edge of the tape cartridge.

A spring may be associated with the stop means longitudinally to orient the tape cartridge in the operative position against the lip.

Alignment means may be associated with the loading rack for transversely orienting the tape cartridge in the operative position.

Such alignment means may include a wedge extending from the one side of the rack which receives the front edge of the tape cartridge, and a fixed bevelled member.

In a particularly advantageous manner, the loading rack may include a pair of rails for receiving the tape cartridge.

In such case, the rails may be movable between standby and operative positions by means of a handle associated with one of the rails.

The loading rack may include an arm extending across the loading rack and over the space to receive the tape cartridge in the standby position, the arm engaging the tape cartridge and urging it to the operative position responsive to movement of the handle.

The arm may be biased by a spring towards the rails to permit movement of the rack to its operative position after the cartridge reaches its operative position.

The tape cartridge may engage a plurality of fixed pedestals to orient the cartridge in the operative position.

The tape cartridge may include a write-protect tab in the rear edge, in which case, the apparatus may include means for detecting the disposition of the write-protect tab on the tape cartridge.

The detecting means may include a pivoted lever, one end of which includes a protrusion for engaging the write-protect tab, and the other end of which is operatively associated with a sensor for monitoring the position of the protrusion.

Preferably, the sensor is an optical interrupter. The end of the lever having the protrusion may also include an inclined member extending outwardly and over one of the rails of the loading rack.

In this case, the protrusion of the lever may be normally biased towards the write-protect tab, and the inclined member may be so configured in relation to the rail that the rail retains the protrusion away from the write-protect tab until the loading rack is lowered from the standby position.

A spring may normally bias the loading rack to the standby position.

Advantageously, interlock means is in operative association with one of the rails of the loading rack.

The interlock means may comprise a gate pivotable into and out of alignment with the rail, a solenoid connected to the gate to pivot the gate responsive to an electrical signal, and control means for generating the electrical signal.

With this arrangement, the gate may engage the bottom of the rail in the standby position, and the top of the rail in the operative position.

The gate may be normally biased into alignment with the rail.

The control means may generate an electrical signal to retract the gate when power is applied to the apparatus.

The control means may generate an electrical signal to retract the gate when the tape cartridge is to be unloaded.

The control means may generate an electrical signal to release the gate responsive to a sensor for detecting when the tape cartridge and the rail are lowered to the operative position.

Conveniently, the sensor is an optical interrupter.

The sensor may be operated responsive to a first lever, the end of which is located in alignment with the rail, so that the first lever is depressed when the rail is moved to the operative position.

The gate and the first lever may include cooperating inclines so that the first lever is maintained in the depressed condition when the gate is in alignment with the rail.

The sensor may be operated responsive to a second lever, one end of which is located in alignment with the tape cartridge, so that the second lever is depressed when the tape cartridge is moved to the operative position.

To assist removal of the cartridge from the operative position, the rails of the loading rack may include a bend close to their pivots and may have an operative position below the cartridge in its operative position, whereby the rails engage the cartridge at positions close to the one end thereof when moved to raise the cartridge to its standby position. This is of particular value where the supply reel of the cartridge is attracted by a magnetic coupling in the operative position.

The apparatus may be contained with an 13.3cm (5 1/4 inch) form factor.

Whilst the invention includes any novel and inventive features disclosed herein, whether claimed or not claimed specifically, the more important aspects of the invention are defined by the appended claims.

In one embodiment of the present invention apparatus for loading and unloading a tape cartridge, particularly an 3480 tape cartridge, comprises means for receiving the tape cartridge along one of its side edges, so that what is normally considered to be the rear edge of the tape cartridge is laterally received within the loading/unloading mechanism, and providing suitable means for properly interacting with the tape cartridge in this modified orientation. To this end, means are provided for receiving the tape cartridge along one of its side edges, and for urging the tape cartridge into a standby position. From this standby position, the cartridge is then capable of being lowered into engagement with the drive mechanism which is to operate the supply reel of the tape cartridge. In the course of these operations, a pin is caused to engage the leader block of the tape cartridge so that the tape cartridge is then ready for loading into the transport apparatus.

Special features provided in connection with such a loading/unloading mechanism include a sensor for detecting the condition of a write-protect device associated with the tape cartridge, sensors for monitoring the condition of the tape cartridge within the apparatus, and means for facilitating loading and unloading of the tape cartridge in a simplified, yet fail-safe fashion.

The invention is illustrated, merely by way of example, in the accompanying drawings, in which:-

Figure 1 is a fragmented, perspective view of a preferred embodiment of tape cartridge loading/unloading mechanism in accordance with the present invention;

Figure 2 is a partial, elevational view showing the means used to orient the tape cartridge laterally in the operative position;

Figure 3A and 3B are top plan views of the means used to engage the slot in the leader block of a seated tape cartridge in different positions;

Figure 4 is a front elevational view of the means used to determine the condition of the write-protect device associated with the tape cartridge;

Figure 5 is a schematic view of the means used to interface the tape cartridge with the loading/unloading mechanism so as to regulate loading and unloading of the tape cartridge in accordance with the operating mode of the apparatus, to avoid damage to the tape cartridge;

Figure 6 is a partially sectioned, elevational view of the loading/unloading mechanism of Figure 1, showing the tape cartridge placed within the loading/unloading mechanism in a standby position; and

Figure 7 is a partially sectioned, elevational view similar to Figure 6, showing the tape cartridge in an operative position.

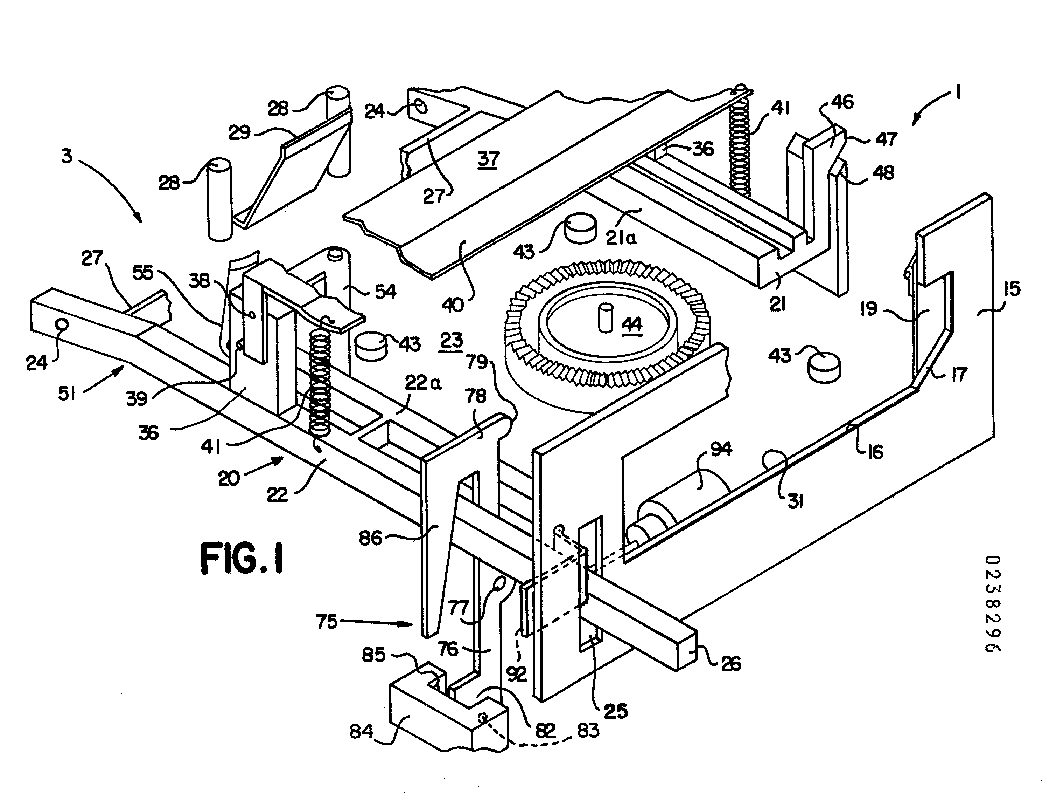

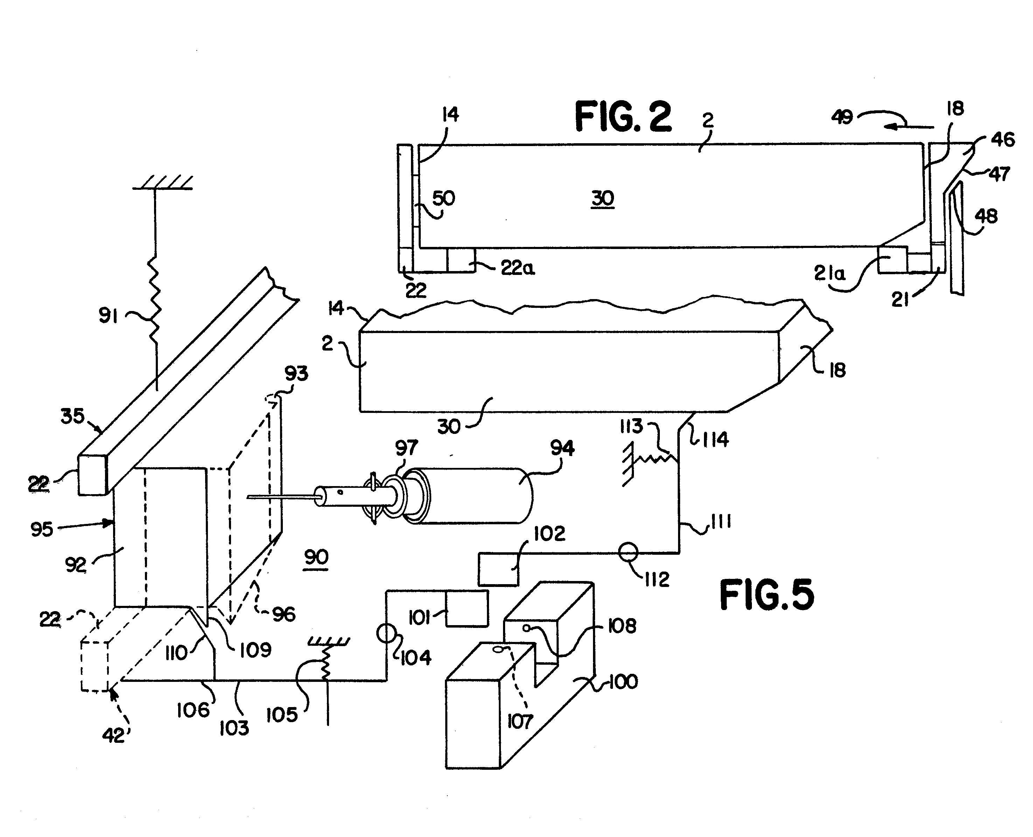

A preferred embodiment of a loading/unloading mechanism 1 (Figure 1) according to the present invention is specially suited to receive 3480 tape cartridge 2 (Figure 2) within a transport apparatus 3 which is capable of being located within the confines of a standard 13.3cm (5 1/4 inch) form factor or footprint.

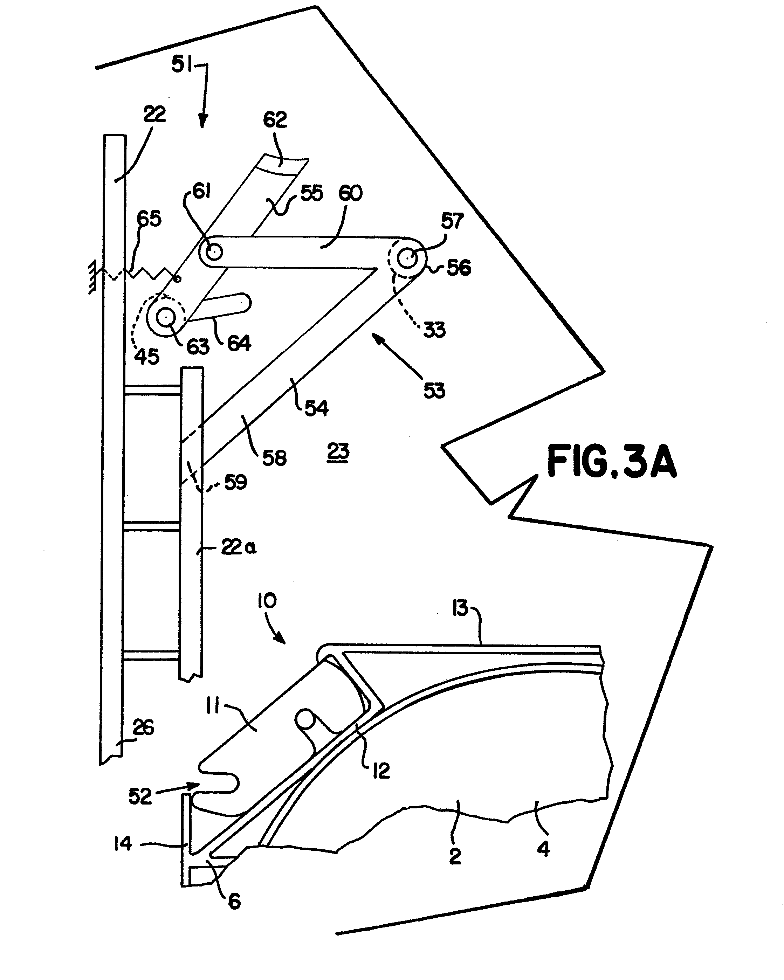

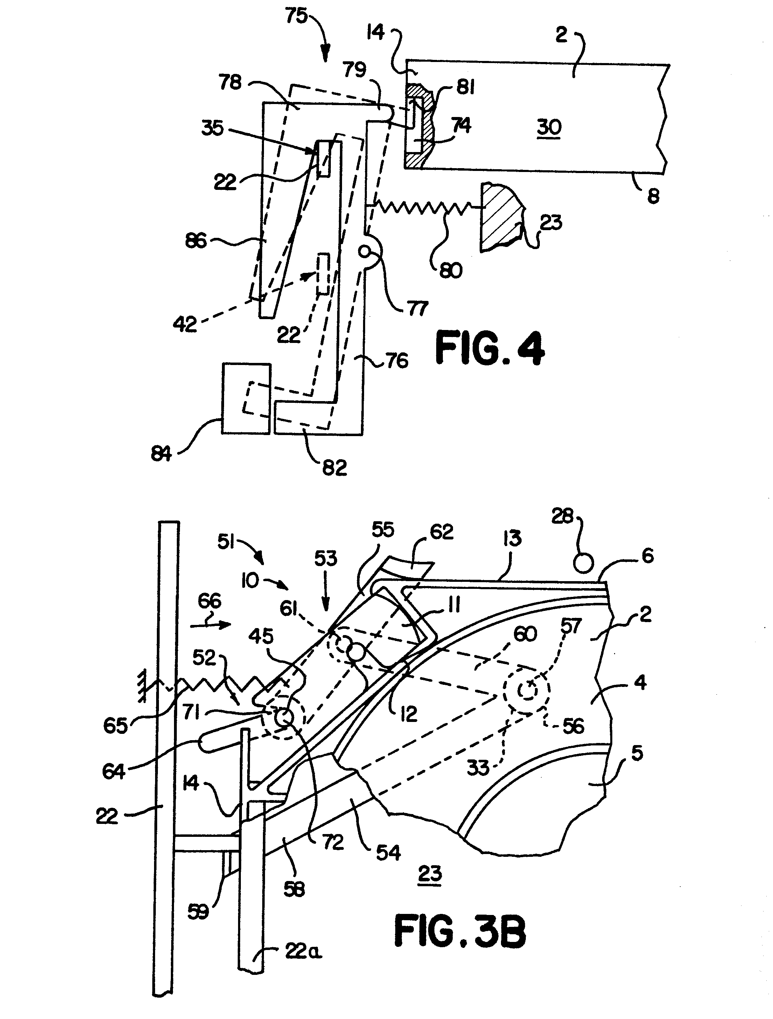

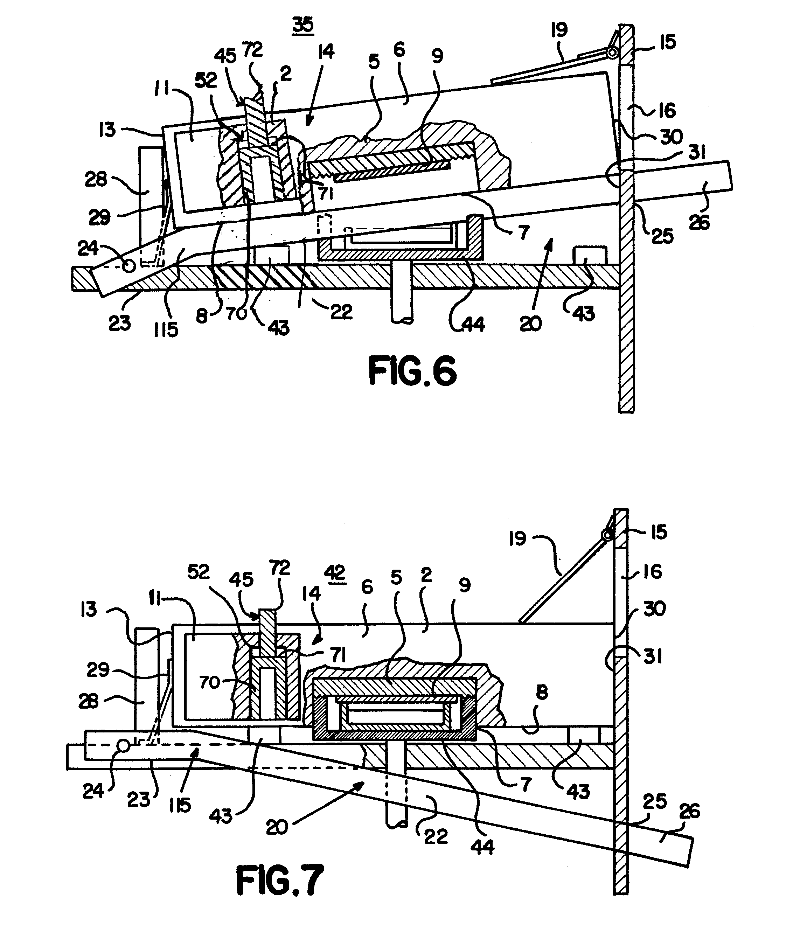

The tape cartridge 2 (Figures 3A and 3B) comprises a web of magnetic recording tape 4 wound upon a supply reel 5 and contained within a housing 6. The web is wound with the surface of the tape carrying the oxide coating on the inside. An aperture 7 (Figures 6 and 7) in the lower face 8 of the housing 6 allows access to a magnetic coupling member 9 and a toothed annulus on the supply reel 5 by means operable to rotate the reel, as will be described more fully below. A corner 10 (Figure 3A) of the housing 6 is open, and receives a leader block 11, which is securely engaged to the free end 12 of the web of tape 4.

In accordance with the present invention, the tape cartridge 2 is to be inserted into the loading/unloading mechanism 1 with a side face 13 of the cartridge 2 leading (Figure 3A), so that the face 14 of the tape cartridge 2 which is normally considered to be its rear face is positioned laterally, along the left side of the transport apparatus 3 as viewed from the front of the loading/unloading mechanism 1 (Figure 1). The cartridge 2 has faces 13, 14, 30 and 18, which, although referred to herein by their conventional designations side, rear, side and front, are used in the present invention as front, side, rear and side faces.

To receive the tape cartridge 2 in this orientation, the front face of the loading/unloading mechanism 1 takes the form of a bezel 15 having an opening 16, the periphery of which is correspondingly configured to the longitudinal cross-section of the tape cartridge 2, as it is to be inserted into the loading/unloading mechanism 1. Thus, the right side (Figure 1) of the opening 16 in the bezel 15 has a chamfer 17, to accept the narrowed front face 18 (Figure 2) of the tape cartridge 2 and prevent reversed (180°) insertion of the tape cartridge 2. Preferably, although not necessarily, the opening 16 is closable by a hinged door 19 (Figures 1, 6 and 7).

Upon its insertion through the opening 16 in the bezel 15, the tape cartridge 2 is received upon a loading rack 20. The loading rack 20 includes righthand and lefthand side rails 21 and 22 which are pivoted to a bed 23 of the transport apparatus 3 at pivots 24. The righthand rail 21 extend from its pivot 24 to a position short of the bezel 15. The lefthand rail 22 extends from its pivot 24 through a slot 25 in the bezel 15, so that its free end 26 can serve as an actuator handle, as will be described more fully below. The rails 21 and 22 are connected together by at least one cross rail 27 so as to strengthen the loading rack 20, and to cause corresponding movement of the rail 21 responsive to movement of the handle end 26 of the rail 22. The side rails 21 and 22 have parallel side extensions 21a and 22a, respectively, to provide support surfaces for the tape cartridge 2.

Upstanding from the bed 23 of the transport apparatus 3 are a pair of stops 28 and a leaf spring 29. The stops 28 are spaced from the bezel 15 by a distance which slightly exceeds the width between ridge faces 13 and 30 of the cartridge 2. As a result, upon insertion of the tape cartridge 2 through the opening 16 of the bezel 15, the side faces 13 and 30 of the cartridge 2 are nested in position between the stops 28 and the inside lower lip 31 of the opening 16 of the bezel 15, so that the lower face 8 of the cartridge 2 rests upon extensions 21a and 22a of the rails 21 and 22 and the interconnecting cross-support 27. The spring 29 serves to bias the cartridge 2 against the inside lower lip 31 of the bezel 15, or against another stop on the transport bed 23 just inside the bezel 15, if provided. This seats the cartridge 2 longitudinally in what is essentially a standby position 35 (Figure 6) in the loading/unloading mechanism 1, which readies the cartridge 2 for subsequent loading, as will be described more fully below.

Each of the rails 21 and 22 has an upstanding support 36 for pivots 38 of a spring-loaded arm 37 extending across the mechanism. The arm 37 has a curve leaf-shaped extension 40 at its forward edge nearest the bezel 15, which is connected to the rails 21 and 22 by a pair of tension springs 41. A stop 39 on each support 36 is engaged by the arm 37 under the influence of the springs 41 and limits the downward movement of the leaf-shaped extension 40 which is normally spaced from the cartridge receiving surfaces on the extensions 21a and 22a of the rails 21 and 22 by a distance which is slightly more than the height of the cartridge 2. This is done to avoid possible interference with the cartridge 2 as it is inserted through (or ejected from) the opening 16 of the bezel 15, and onto the loading rack 20.

From the standby position 35 (Figure 6), the cartridge 2 can be lowered to an operative position 42 (Figure 7) by depression means of the handle end 26 of the rail 22. This lowers the rail extensions 21a and 22a supporting the cartridge 2, any tendency of the cartridge 2 not to follow the extensions being overcome by contact between the leaf-shaped extension 40 of the spring-loaded arm 37 and the upper face of the cartridge 2. The cartridge 2 is pulled downwardly under the influence of the spring-loaded arm 37 until the lower face 8 of cartridge 2 comes to rest upon a series of pedestals 43 upstanding from the base 23 preferably in a three-point pattern. Further movement of the rails 21 and 22 so that the extensions 21a and 22a are clear of the cartridge 2 (Figure 7) is permitted by pivotation of the arm 37 against the action of the springs 41. Upstanding from the base 23 is a coupling 44 rotatable by a supply motor beneath the base. The coupling 44 includes a toothed annular portion and a magnetic portion for co-operation with the toothed annulus and magnetic coupling member 9 on the supply reel 5. With the cartridge 2 on the pedestals 43 the coupling 44 of the supply motor is received into the aperture 7 to engage the corresponding coupling of the cartridge 2.

In the operative position 42, the pedestals 43 serve to support the cartridge 2 at the proper height above the bed 23, so as to bring the coupling 9 of the supply reel 5 into proper engagement with the coupling 44, and so as to place a configured guide pin 45 in proper registration with the leader block 11 of the cartridge 2, as will be described more fully below.

As previously described, the spring 29 serves to orient the cartridge 2 longitudinally within the loading/unloading mechanism 1. Proper transverse positioning of the cartridge 2 within the mechanism 1 is achieved by providing the righthand rail 21 of the loading rack 20 with one or more wedges 46 (Figure 2) which extend upwardly across the front face 18 of the cartridge 2. Each wedge 46 has an inclined surface 47 which is configured to cooperate with a corresponding inclined surface of a spring 48 which extends upwardly from the bed 23. Consequently, as the cartridge 2 is lowered to the operative position 42, the inclined surface 47 of the wedge 46 is brought into contact with the inclined surface of the spring 48, so that further downward movement urges the wedge 46 against the front face 18 of the cartridge 2, in turn urging the cartridge 2 in the direction of the arrow 49 and its rear face 14 into an alignment stop 50.

As a result of such alignment, the cartridge 2 is seated in the operative position 42 for proper mating with the coupling 44, and for proper interaction with the remainder of the loading/unloading mechanism 1, as will be described more fully below.

With the tape cartridge 2 within the loading/unloading mechanism 1 at 90° to the conventional disposition, as previously described, a number of problems arise in ensuring that the aligned tape cartridge 2 is ready to be operated upon by the transport apparatus 3. The loading/unloading mechanism 1 therefore includes a number of devices which ensure proper interaction between a properly seated tape cartridge 2 and the remainder of the transport apparatus 3.

In this embodiment of the invention, a properly seated tape cartridge 2 will be received within the loading mechanism 1 such that the leader block 11 (Figure 3A) of the cartridge 2 is positioned at the rear, left corner 51 of the loading rack 20 rather than the normally expected rear, right corner, because the rear face 14 of the tape cartridge 2 is now located laterally along the loading rack 20, rather than adjacent to the stops 28 in its traditional position. As a consequence of this, the slot 52 which is conventionally provided in the leader block 11, to enable engagement of the leader block 11 by a guide pin, will extend laterally from the tape cartridge 2, rather than longitudinally toward the rear of the transport apparatus 3. It therefore becomes necessary to take special measures for the guide pin 45 to engage the slot 52 properly, due to this special positioning.

The guide pin 45 (Figures 6 and 7) has a broad base 70 with a central recess in the bottom thereof. At a shoulder 71, the pin 45 narrows to form a narrow guide 72. The slot 52 in the leader block has a narrow entry portion leading to an end seating portion of a crosssection corresponding to that of guide pin 45. It will be appreciated that the narrow guide 72 of the pin 45 can enter and pass through the narrow entry portion of the slot 52, and that when in the end seating portion, the pin 45 can move upwardly to engage the base 70 into the broad lower portion of the slot.

A pin locating mechanism 53 (Figures 3A and 3B) includes an essentially V-shaped arm 54 pivoted at its apex 56 by a pivot pin 57 to the bed 23 of the transport apparatus 3. A first leg 58 of the arm 54 terminates in an upwardly extending protrusion 59 which in one position of the arm 54 is in general alignment with and below the extension 22a of the lefthand rail 22. The second leg 60 of the arm 54 terminates at a pivot 61 for a second arm 55 of the mechanism 53. The arm 55 has an upwardly extending shoulder 62 at one end, and at its other end a pin 63 extending downwardly for co-operative engagement within a slot 64 in the bed 23 and upwardly for engagement in the base 70 of the pin 45.

The pivot pin 57 allows a certain limited degree of freedom to the arm 54 in relation to the bed 23 and the protrusion 59 engaging the undersurface of the extension 22a causes depression of the locating mechanism 53 against the action of a coil spring 33 associated with the pivot pin 57.

A spring 65 normally biases the mechanism 53 to the position shown in Figure 3A, in which position, the pin 63, and thus the guide pin 45, is located just inboard of the loading rack 20 between the axes of the rail 22 and extension 22a, while the protrusion 59 is located in alignment with, and in engagement with, the extension 22a.

In this position, with the load rack 20 tilted upwardly (Figure 6) in position to receive a cartridge 2 in the standby position, but not yet in this position (Figure 3A), the broad base 70 of the guide pin 45 is below the level of the narrow entry portion of the slot 52 in the leader block 11 of the cartridge 2 as it moves towards the standby position.

As a result, the pin 63 and guide 45 are placed in proper position for the acceptance of a tape cartridge 2 within the loading/unloading mechanism 1, while the protrusion 59 serves to depress the pin locating mechanism 53 to place the pin 45 in proper position for subsequent lateral movement through the narrow slot 52 in the leader block 11 of an incoming cartridge 2. This also serves to support the initially empty loading rack 20 in the standby position 35, and to avoid lowering of the loading rack 20 without a tape cartridge 2 having first been placed within the loading/unloading mechanism 1.

As a tape cartridge 2 is inserted onto the loading rack 20 (Figure 3B), the side edge 13 contacts the shoulder 62 of the arm 55, causing the arm 55 to pivot counterclockwise about the pivot 61, the pin 63 moving in the general direction 66 along the slot 64. At the same time, the pivot 61 is moved in the direction of insertion of the cartridge 2 to pivot the arm 54 about the pin 57 and move the protrusion 59 out of alignment with the extension 22a. This serves to draw the pin 63 and guide pin 45 inwardly into alignment with the slot 52 of the leader block 11 as the tape cartridge 2 comes to be seated in its standby position at 35, so that the narrow guide 72 of the pin 45 passes along the narrow entry portion of the slot 52 until the broad base 70 is aligned with the broad lower portion of the slot 52. In this position, the protrusion 59 passes clear of pin locating mechanism 53 to rise and locate the guide pin 45 in the leader block 11 (Figure 6) the extension 22a (Figure 3B), freeing the loading rack 20 and cartridge 2 are then ready for movement to the operative position 42 upon downward movement of the handle end 26 of the rail 22. The shoulder 62 is preferably curved to facilitate movement of the arm 55 across the edge 13 of the tape cartridge 2 in the course of these operations.

As the tape cartridge 2 becomes seated in the standby position 35, the narrowed guide 72 of the pin 45 enters the slot 52 of the leader block 11 as a consequence of movement of the pin 63 as previously described. As the loading rack 20 and cartridge 2 are lowered to the operative position 42, the pin locating mechanism 53 is forced downwardly by engagement of the extension 22a on the first leg 58. When the cartridge 2 reaches the operative position resting on the pedestals 43, the guide pin 45 is seated within the end portion of the slot 52 in the leader block 11 (Figure 7). The loading rack 20 is tilted further and the pin locating mechanism 53 is lowered with the extension 22a against the coil spring 33 until the pin 63 no longer engages in the guide pin 45. The latter is then free to be moved laterally and to carry with it the leader block 11 and the free end 12 of the web of tape 4. When it is desired to remove the tape cartridge 2 from the loading/unloading mechanism 1, the foregoing steps are reversed, returning the guide pin 45 to the pin 63, freeing the guide pin 45 from the slot 52 of the leader block 11, and returning the various components of the pin locating mechanism 53 to their original position under the influence of the springs 33 and 65 and protrusions 59 as the tape cartridge 2 is removed from the loading rack 20.

Another important feature of the invention in connection with the operation of tape cartridges is that it is often the case that information already contained on the tape in the cartridge is not to be disturbed, and is therefore not to be recorded over. For this reason the cartridge 2 conventionally has a write-protect tab 74 (Figure 4) which is capable of being selectively re-oriented to protect the contents of the tape if further data recording is not to take place. It is therefore important for the loading/unloading mechanism 1 to provide a means for detecting whether or not the write-protect tab 74 has been re-oriented in the cartridge 2 so as to inhibit the writing of information on the web of tape 4, and prevent a corresponding loss of data. To this end, a write-protect means 75 is provided.

The write-protect means 75 includes a lever 76 which is connected to the support bed 23 of the transport apparatus 3 at a pivot 77. A first end 78 of the lever 76 has a protrusion 79 which is normally biased towards the cartridge 2 by a spring 80. The protrusion 79 is positioned, shaped and sized so as to engage the write-protect tab 74, if the latter is so oriented as not to prevent the writing of data. If the tab 74 is so oriented as to prevent the writing of data, the protrusion 79 is enabled to enter a cavity 81 exposed by the re-orientation of the tab 74. The other end of the lever 76 has a flag 82 (Figure 1) which is capable of interrupting a beam of light between a source 83 and sensor 85 of an optical interrupter 84. The flag 82 and optical interrupter 84 (Figure 4) are positioned so that engagement of the protrusion 79 of the pivoted lever 76 on the tab 74 or in the cavity 81 determines whether or not light from the source 83 will reach the sensor 85. This provides a signal which can be used electronically to enable or disable the writing of data in accordance with the condition of the write-protect tab 74 on the cartridge 2. Preferably, the writing of data is disabled in the absence of light on the sensor 85, so that the contents of the cartridge 2 will be protected even in the event of a failure of the optical interrupter 84 (or its associated systems).

Normally, the spring 80 will bias the protrusion 79 of the lever 76 fully to the right, which would hamper insertion of the cartridge 2 into the loading/unloading mechanism 1. For this reason, the end 78 of the lever 76 extends over the lefthand rail 22 and has a downward extension forming an inclined latch 86. When the lefthand rail 22 is in its raised position to receive a cartridge 2, the rail 22 engages the incline of the latch 86 so as to pivot the lever 76 against the spring 80 to draw the protrusion 79 to the left, clearing the path for the cartridge 2. After the cartridge 2 has been received in the standby position 35, the rail 22 is lowered to the operative position 42, passing along the incline of the latch 86 to free the lever to pivot and the spring 80 to bias the protrusion 79 for operation as previously described. During unloading of the cartridge 2, the rail 22 rises to engage the incline of the latch 86 to pivot the lever 76 and draw the protrusion 79 away from the cartridge 2 as the cartridge 2 is raised to the standby position 35.

Yet another important feature of the invention is that to avoid damage to the cartridge 2, and the subsequent loss of data, as well as to avoid damage to the various components of the loading/unloading mechanism 1, it is important to make sure that the tape cartridge 2 can only be operated upon (loaded, tape transported, unloaded), when conditions are safe for such operations to take place. For this reason, the loading/unloading mechanism 1 has a number of fail-safe features. For example, in addition to holding an empty loading rack 20 in the standby position 35, the protrusion 59 of the pin locating mechanism 53 serves to prevent lowering of the handle 26 until such time as a cartridge 2 has been loaded into the mechanism 1, and has been correctly seated on the loading rack 20. The write-protect means 75 serves to prevent the loss of data to be retained. Yet another safety feature is an interlocking system 90 (Figure 5) which serves to prevent improper operation of the loading/unloading mechanism 1 through its various cycles, as follows.

A spring 91 (Figure 5) is preferably provided normally to bias the rail 22, and therefore the loading rack 20, to the standby position 35, so that a cartridge 2 on the rack 20 in the standby position (Figure 6) is seated just within the opening 16 of the bezel 15. A spring latch or a series of mechanical detents could be provided to serve this function, if desired. With a cartridge 2 properly seated in its standby position 35, the protrusion 59 (Figure 3B) of the pin locating mechanism 53 is withdrawn from beneath the extension 22a of the rail 22, so that the loading rack 20 can be lowered to the operative position 42, along with the cartridge 2. Such movement is additionally regulated by the interlocking system 90 (Figure 5), as follows.

An L-shaped gate 92 is pivoted about a pin 93 and is movable by operation of a solenoid 94, between a first operative position 95 (shown in full lines) in which it is in alignment with the left rail 22, and a second operative position 96 (shown in broken lines) in which it is clear of the path of the rail 22. The height of the gate 92 is approximately equal to the distance between the bottom of the rail 22 in the standby position 35 and the top of the rail 22 in the operative position 42. The solenoid 94 is normally biased by a spring 97 to an extended position, so that the gate 92 is normally biased to the first operative position 95 in alignment with the rail 22. If the rail 22 is in the standby position 35, it cannot be lowered to the operative position 42, and if the rail 22 is in the operative position 42, it cannot be raised to the standby position.

The solenoid 94 can be activated to withdraw the gate 92 to the second operative position 96. Thus, the loading rack 20 and cartridge 2 cannot be lowered to the operative position 42 or raised to the standby position 35, until the solenoid 94 has been activated.

Thereafter, when the transport apparatus 3 is switched off, or in the event of a power failure, the solenoid 94 ceases to be activated and the gate 92 is moved to the first operative position 95, so that the rail 22 cannot be lowered from the standby position 35, or raised from the operative position 42. This serves to prevent lowering of a cartridge 2 to the operative position in an inactive system, and to frustrate attempts to remove a cartridge 2 from the inoperative loading/unloading mechanism 1 thus avoiding damage to the tape and cartridge, particularly if the web of tape 4 and the leader block 11 have not yet been returned to the cartridge 2.

The solenoid 94 is activated by operative signals from an optical interrupter 100, waving a pair of flags 101, 102. The first flag 101 is mounted at one end of a lever 103 which is pivoted at 104 and biased by a spring 105. The opposite end 106 of the lever 103 is positioned beneath the rail 22 so that when the rail 22 is moved to the operative position 42, the end 106 of the lever 103 is pushed down so that the flag 101 is pivoted upwardly and away from the path of a beam of light between source 107 and sensor 108 of the optical interrupter 100. The end 106 of the lever 103 also has an inclined projection 110, which cooperates with a corresponding incline 109 associated with the gate 92 to raise the flag 101 from the optical interrupter 100 when the gate 92 is in the first operative position 95, overlying the rail 22 as previously described.

A second flag 102 is mounted at one end of a lever 111, which is pivoted at 112 and biased by a spring 113. The opposite end 114 of the lever 111 is positioned beneath the loading rack 20 so that when a tape cartridge 2 is properly received and seated in the operative position 42, the end 114 of the lever 111 is depressed so that the flag 102 is withdrawn from between the source 107 and sensor 108 of the optical interrupter 100.

Initially, the gate 92 is in the first operative position 95 so that the flag 101 is raised by engagement between the projection 110 and incline 109. In the absence of a cartridge 2, the flag 102 is lowered by the spring 113 to interrupt the beam of light in the optical interrupter 100. The interrupter generates a signal which allows activation of the solenoid 94.

A tape cartridge 2 is then located on the loading rack 20 in the standby position 35. When operation is desired, and upon applying power to the transport mechanism 3, the solenoid 94 is activated to retract the gate 92 enabling the rail 22 and cartridge 2 to be lowered to the operative position 42. As the incline 109 disengages from the projection 110, the lever 103 pivots under the influence of the spring 105 to lower the flag 101 into the interrupter 100. As the tape cartridge 2 assumes the operative position 42, the end 114 is depressed by the cartridge to pivot the lever against the spring 113 and raise the flag 102 from the interrupter 100. As the rail 22 assumes the operative position 42, the end 106 of the lever 103 is depressed by the rail 22 to pivot the lever 103 against the spring 105 to raise the flag 101 from the interrupter. Both flags 101 and 102 are thus withdrawn from between the source 107 and sensor 108 of the optical interrupter 100, generating an electrical signal used (eg in a switching circuit or a microprocessor) to interrupt power to the solenoid 94, which moves the gate 92 to the first operative position 95 over the rail 22. This prevents the rail 22 from being raised from the operative position to the standby position until a desired unloading operation takes place, which serves to prevent removal of the tape cartridge 2 from the loading/unloading mechanism 1 during powered operation of the transport apparatus 3, as well as during unpowered failures as previously described. Interaction between the incline 109 and projection 110 serves to maintain such conditions, even if the rail 22 is accidentally jostled to an extent which would permit the flag 101 to re-enter the optical interrupter 100, erroneously signaling for retraction of the gate 92. Such retraction would release the rail 22 for upward movement under the influence of the spring 91.

It is not until after the leader block 11 has been returned to the cartridge 2, that a suitable signal is generated (eg in a switching circuit or a microprocessor) to over-ride the signal from the interrupter 100 and again activate the solenoid 94, to withdraw the gate 92 to its second operative position 96, permitting the spring 91 (or an operator) to raise the loading rack 20 to the standby position 35. Whether or not the cartridge 2 is returned to the standby position 35, or is raised beyond the inside lower lip 31 of the opening 16 in the bezel 15, for discharge the loading/unloading mechanism 1, depends upon the forces which are applied to the loading rack 20 by the spring 91, or the operator's positioning of the handle end 26 of the rail 22. By using a relatively weak spring, or an appropriately configured detent, the cartridge 2 can be returned to a standby position in engagement with the inside lower lip 31 of the bezel 15. Using a stronger spring would result in ejection of the cartridge 2 from the loading/unloading mechanism 1, with the assistance of the spring 29. In the former case, the gate 92 (upon deactivation of the solenoid 94) will be brought into contact with the side of the rail 22 until such time as the handle 26 is fully raised to release the cartridge 2 from the apparatus. In the latter case, the gate 92 will immediately assume a position beneath the rail 22, preventing further operation of the transport apparatus 3 until such time as appropriate operating conditions are met.

In loading a cartridge 2 into the loading/unloading mechanism 1, steps should be taken, where possible, to ensure that the cartridge 2 is installed in its proper orientation, by preventing an operator from accidentally installing the cartridge 2 in some other orientation. This is particularly important in view of the fact that the present invention addresses the insertion of a cartridge 2 into the loading/unloading mechanism 1 in an orientation which is rotated essentially 90 degrees from the normally expected positioning of the cartridge 2. For this reason, means are provided to ensure that the tape cartridge 2 is received within the loading/unloading mechanism 1 only in the proper orientation. In the described embodiment, the opening 16 in the bezel 15 is configured with the chamfer 17 to receive the cartridge 2 with its side edge 13 leading, rather than its rear edge 14. The width of the opening 16 is such that if the cartridge 2 is presented with the 12.7 cm wide side edge 13 leading and correctly oriented, the cartridge is accepted into the opening 16 of the bezel 15. If the cartridge is presented upside down, or with the side edge 30 leading, a corner of the cartridge engages the chamfer 17 and acceptance of the cartridge is prevented. The width (10cm) of the rear and front edges 14 and 18 being less than that of the side edge 13 and thus of the opening 16, it might be possible to push the cartridge 2 through the opening 16 with rear or front edge 14 or 18 leading despite the chamfer. However, the length of the cartridge 2 (or width of side edge 13) is greater than the distance between the stops 28 and the inside lower lip 31 of the bezel 15, that distance being only slightly greater than the width of the cartridge 2 (or width of the rear edge 14). Thus, only proper orientation of the cartridge 2 within the loading/unloading mechanism 1 will enable the cartridge 2 to fit between the stops 28 and the inside lower lip 31 of the bezel 15, while attempts at longitudinal insertion of the cartridge 2 will be limited by the stops 28, leaving the cartridge projecting out of the opening 16, unable to be lowered to the operative position.

Steps should also be taken, where possible, to facilitate unloading of the tape cartridge 2. As previously described, the cartridge 2 to which the present invention relates is operated by means of toothed, magnetic couplings 9 and 44 which establish an operative connection with the supply reel 5 of the cartridge 2 when the cartridge 2 is moved to the operative position 42. To ensure positive driving of the supply reel 5, this magnet will generally exert a force of attraction of the order of 6.8 to 7.3 kg (15 to 16 pounds). This represents a substantial loading which can make movement of the rack 20 by the handle 26 from the operative position to the standby position quite difficult. To minimize this difficulty, the rails 21 and 22 are preferably configured with a bend 115 (Figures 6 and 7), close to the pivots 24 and preferably near the side edge 13 of the tape cartridge 2. Because the bends 115 are remote from the handle end 26 of the rail 22, and the initial engagement of the rails with the cartridge 2 upon upward movement from the operative position is at points close to the side edge 13, a mechanical advantage is obtained which facilitates lifting the cartridge 2 from the coupling 44 during unloading of the cartridge 2. In addition to this mechanical advantage, the bend 115 serves in essence to "peal away" the coupling member 9 from the coupling 44 by lifting one edge of the cartridge before the other, further facilitating removal of the cartridge 2 from the coupling. It is also to be noted that the bend 115 will assist in smoothly lowering the cartridge 2 onto the coupling 44 during a loading operation.

It may be found more convenient to locate the guide pin locating means 53 upon the loading rack rather than on the bed 23. The lever 54 would still have to be able to move up and down the pivot pin 57 under the influence of the spring. The slot 64 would need to be in a part of the rack and the protrusion 59 would provide the up and down control for the lever 54.

The disposition of the cartridge with the leader block in the lefthand corner of the mechanism as viewed form the front, results in the tape transport drawing the tape out of the cartridge in what might be described as a clockwise direction. This is to be contrasted with the conventional arrangement in which the leader block is in the righthand corner of a cartridge-receiving body and the tape is drawn out in a counterclockwise direction. As the main body of the tape transport is behind the loading/unloading mechanism, the tape from the apparatus according to the present invention, has its non-oxide-coated face inwardly towards all the guide posts, rollers, bearings and so forth. Thus less care is needed to protect the engaged face of the tape, than is the case with the conventionally oriented tape.

It will be understood that various changes in the details, materials and arrangement of parts which have been herein described and illustrated diagrammatically in order to explain the nature of this invention may be made by those skilled in the art within the scope of the invention as expressed in the following claims. In particular, the loading/unloading mechanism of the present invention can operate in positions other than the horizontal position shown in the drawings, such as a vertical position.

## Claims

1. Apparatus for loading and unloading a tape cartridge (2) in a tape transport, the tape cartridge (2) including a web of tape (4) disposed on a supply reel (5) and having a free end (12) engaged by a leader block (11), the leader block (11) having an engagement slot (52) opening towards a rear edge (14) of the tape cartridge, characterised by a loading rack (20) for receiving a cartridge (2) with its rear edge (14) along a side edge of the loading rack, so that the slot (52) is transversely oriented in the loading rack, and means (45) and (53) for engaging the transversely oriented slot (52) of the leader block (11), for loading and unloading tape in the tape transport.

2. Apparatus as claimed in claim 1, characterised in that the rack (20) is movable between a standby position for receiving a tape cartridge in a standby position, and an operative position in which the cartridge is in an operative position, and in that the slot engaging means includes a guide pin (45) for engaging the slot (52) of the leader block (11), and a guide pin locating means (53) for locating the guide pin (45) in the slot (52) when the tape cartridge (2) is located in the standby position.

3. Apparatus as claimed in claim 2, characterised in that the guide pin locating means (53) includes a lever (55), one end of which has a shoulder (62) for engaging a leading side edge (13) of the tape cartridge (2), and the other end of which has a pin (63) for receiving the guide pin (45) and for moving the guide pin towards and away from the slot (52) responsive to engagement and disengagement of the shoulder (62).

4. Apparatus as claimed in claim 3, characterised in that movement of the pin (63) of the lever (55) is regulated by a slot (64) in the apparatus, in which the pin is engaged.

5. Apparatus as claimed in claim 3 or 4, characterised in that the lever (55) is biased by a spring (65) to draw the pin (63) away from the slot (52) in the leader block.

6. Apparatus as claimed in claim 3, 4 or 5, characterised in that the lever (55) is mounted for movement away from the tape cartridge (2) against the biasing force of a spring (33), so that the pin (63) is withdrawable from the guide pin (45) when the tape cartridge is in its operative position.

7. Apparatus as claimed in claim 6, characterised by an additional lever (54) pivotally connected to the lever (55) and including a protrusion (59) for alternative engagement and disengagement with part (22a) of the loading rack (20).

8. Apparatus as claimed in claim 7, characterised in that the protrusion (59) of the additional lever (54) is disengaged from the part (22a) of the loading rack (20).

8. Apparatus as claimed in claim 7, characterised in that the protrusion (59) of the additional lever (54) is disengaged from the part (22)a of the loading rack (20) as the pin (63) and guide pin (45) reach the end of the slot (52) in the leader block (11) of the cartridge (2) in the standby position, whereby the spring (33) is enabled to move the lever (55) towards the cartridge (2).

9. Apparatus as claimed in any preceding claim, in which the tape cartridge (2) has a bevelled front edge (18) opposite the rear edge (14), characterised in that the apparatus is housed in an enclosure having an aperture (16) for receiving the tape cartridge (2), which aperture includes a chamfer (17) for receiving the bevelled edge (18) of the cartridge, the cartridge being locatable between the inside lip (31) of the aperture (16) and stop means (28), and a spring (29) is associated with the stop means (28) longitudinally to orient the tape cartridge (2) against the lip (31) in the operative position.

10. Apparatus as claimed in any preceding claim, in which the rack (20) is movable between a standby position for receiving a cartridge in a standby position, and an operative position in which the cartridge is in an operative position, characterised by alignment means (46), (47), (48) and (50) associated with the loading rack (20) for transversely orienting the tape cartridge (2) in the operative position, the alignment means including a wedge (46) and (47) extending from the one side of the rack (20) which receives the front edge (18) of the tape cartridge (2), and a fixed bevelled member (48).

11. Apparatus as claimed in any preceding claim, characterised in that the loading rack (20) includes a pair of rails (22), (22a), (21) and (21a) for receiving the tape cartridge (2), which rails are movable between standby and operative positions by means of a handle (26) associated with one of the rails (22), the loading rack including an arm (37) extending across the rack (20) and over the space to receive the cartridge (2) in the standby position, the arm (37) engaging the cartridge and urging it to the operative position responsive to movement of the handle (26), and the arm (37) is biased by a spring (41) towards the rails (21) and (22) to permit movement of the rack (20) to its operative position after the cartridge (2) reached its operative position.

12. Apparatus as claimed in any preceding claim, wherein the tape cartridge (2) includes a write-protect tab (74) in the rear edge (14), characterised in that the apparatus includes means (75) for detecting the disposition of the write-protect tab (74) on the tape cartridge, the detecting means (75) including a pivoted lever (76), one end (78) of which includes a protrusion (79) for engaging the write-protect tab (74), and the other end (82) of which is operatively associated with a sensor (84) for monitoring the position of the protrusion (79), the one end (78) of the lever (76) also having an inclined member (86) extending outwardly and over one of the rails (22), the protrusion (79) of the lever (76) being biased normally towards the write-protect tab (74), and the inclined member (86) being so configured in relation to the rail (22) that the rail retains the protrusion (79) away from the write-protect tab (74) until the rack (20) is lowered from the standby position.

13. Apparatus as claimed in any preceding claim, in which the loading rack (20) includes a pair of rails (22), (22a), (21) and (21a) for receiving the cartridge (2), characterised by interlock means (90) in operative association with one of the rails (22) of the rack, the interlock means comprising a gate (92) pivotable into and out of alignment with the rail (22), a solenoid (94) operatively connected to the gate (92) to pivot the gate responsive to an electrical signal from a control means, the gate (92) being normally biased into alignment with the rail (22) and engaging the bottom of the rail in the standby position and the top of the rail (22) in the operative position.

14. Apparatus as claimed in claim (13), characterised in that the control means generates an electrical signal to release the gate (92) responsive to a sensor (100) for detecting when the tape cartridge (2) and the rail (22) are lowered to the operative position, the sensor being operated responsive to concurrent depression of first and second levers (103) and (111), the end (106) of the first lever (103) being located in alignment with the rail (22) so that the first lever is depressed when the rail is moved to the operative position, the first lever being maintained in the depressed condition by cooperating inclines (109) and (110) on the gate (92) and first lever (103) when the gate is in alignment with the rail, and one end (114) of the second lever (111) being located in alignment with the tape cartridge (2), so that the second lever (111) is depressed when the tape cartridge is moved to the operative position.

15. Apparatus as claimed in any preceding claim, in which the loading rack (20) includes a pair of rails (22), (22a), (21) and (21a) for receiving the tape cartridge (2), characterised in that the rails have an operative position below the cartridge in its operative position, and each has a bend (115) close to its pivot (24), whereby the rails engage the cartridge in the operative position at positions close to one end thereof when moved to raise the cartridge to the standby position.

FIG. I

0238296

0238296

FIG.2

FIG.5

0238296

FIG.3A

0238296

**FIG. 4**

**FIG. 3B**

0238296

FIG.6

FIG.7